# EUROPÄISCHE PATENTSCHRIFT

(11) **EP 4 323 239 B1**
(45) Veröffentlichungstag und Bekanntmachung des Hinweises auf die Patenterteilung: **31.12.2025**
(21) Anmeldenummer: 22720969.9
(22) Anmeldetag: 05.04.2022
(51) Int. Cl.: B60R 16/027, H01R 35/02

(54) **WICKELFEDERKASSETTE**
COIL SPRING CASSETTE
CASSETTE À RESSORT EN SPIRALE

(30) Priorität: 14.04.2021 DE 102021001962
(43) Veröffentlichungstag der Anmeldung: 21.02.2024
(73) Patentinhaber: KOSTAL Automobil Elektrik GmbH & Co. KG, 58513 Lüdenscheid (DE)
(72) Erfinder: MOLDENHAUER, Knut, 58097 Hagen (DE); HESS, Christian, 44894 Bochum (DE); PRIEBE, Rene, 58509 Lüdenscheid (DE)
(74) Vertreter: Leopold Kostal GmbH & Co. KG
(86) Internationale Anmeldenummer: PCT/EP2022/058985
(87) Internationale Veröffentlichungsnummer: WO 2022/218760

(56) Entgegenhaltungen:
- EP-A1- 2 907 701
- DE-A1- 102010 022 542
- DE-A1- 19 602 747
- DE-A1- 19 604 797
- DE-B3- 102005 045 978
- JP-A- 2000 040 574
- JP-A- H08 227 773
- JP-A- H08 227 774

## Beschreibung

Die Erfindung betrifft eine Wickelfederkassette mit einem feststehenden Statorteil und einem relativ dazu drehbeweglich angeordnetem Rotorteil, und mit einem Flachbandkabel, welches an dem Statorteil und dem Rotorteil mechanisch fixiert ist, und das eine elektrische Verbindung zwischen dem Statorteil und dem Rotorteil herstellt, wobei das Flachbandkabel an wenigstens einem seitlichen Randabschnitt mindestens eine Einkerbung aufweist.

Eine Wickelfederkassette ist beispielsweise aus der deutschen Offenlegungsschrift DE 10 2010 022 542 A1 bekannt.

Wickelfederkassetten sind, besonders in Kraftfahrzeugen seit langem bewährte und unverzichtbare Bauteile, um rotatorisch gegeneinander bewegte Elemente, wie Lenkrad und Lenksäule, elektrisch miteinander zu verbinden. Die elektrische Verbindung wird dabei üblicherweise über ein Flachbandkabel vermittelt, welches zwischen einem Stator- und einem Rotorteil der Wickelfederkassette angeordnet ist und sich bei einer Drehbewegung auf- und abwickelt oder sich innerhalb der Wickelfederkassette verschiebt. Das Flachbandkabel kann dabei sowohl elektrische Signale als auch elektrische Energie transportieren, wobei im letzten Fall relativ hohe elektrische Ströme und Spannungen vorliegen können.

Die japanischen Offenlegungsschriften JP H08 227774 A und JP H08 227773 A zeigen jeweils Wickelfederkassetten mit Flachbandkabeln, die in ihren Randbereichen Einschnitte aufweisen. Diese Einschnitte bilden elastische Randbereiche des Kabels aus, die dazu vorgesehen sind, eine elastische Abstützung des Kabels in dem jeweiligen Gehäuse zu bewirken.

Die deutsche Offenlegungsschrift DE 196 04 797 A1 zeigt eine Wickelfederkassette gemäß dem Oberbegriff des Patentanspruchs 1. Das Flachbandkabel dieser Wickelfederkassette ist randseitig mit einem Paar rechteckförmiger Einkerbungen versehen, die zur Befestigung durch ein zugeordnetes Paar flacher Halteelemente dienen.

Der maximal mögliche Verdrehwinkel einer Wickelfederkassette ist üblicherweise durch die Gegebenheiten des Anbauortes begrenzt. Unter ungünstigen Umständen kann es aber dennoch vorkommen, dass ein Flachbandkabel stark gespannt wird und dann durch Überlastung reißt. Beim unkontrollierten Abriss eines Flachbandkabels kann es zu Kurzschlüssen kommen, die zudem weitere Fehler und Defekte nach sich ziehen können.

Es stellte sich die Aufgabe, eine Wickelfederkassette zu schaffen, welche die vorgenannten Nachteile vermeidet oder zumindest verringert.

Diese Aufgabe wird erfindungsgemäß dadurch gelöst, dass die Einkerbung v-förmig ausgebildet ist.

Das Flachbandkabel weist durch die mindestens eine Einkerbung eine gezielt eingebrachte mechanische Schwächung auf. Im Falle einer mechanischen Überlastung reißt das Flachbandkabel daher an dieser ausgewählten, zuvor definierten Stelle. Die Stelle mit der Einkerbung ist dabei derart ausgewählt, dass durch den Abriss freiliegende Leitungsadern hier möglichst keine Gelegenheit zur Ausbildung eines Kurzschlusses haben.

Die erfindungsgemäß ausgebildete Wickelfederkassette ermöglicht dadurch auf einfache Weise eine deutliche Schadensbegrenzung im Falle eines Kabelabrisses.

Besonders vorteilhaft ist es, wenn das Flachbandkabel an seinen beiden Rändern einander gegenüberliegend zwei Einkerbungen aufweist. Hierdurch kann im Falle eines Kabelabrisses eine verhältnismäßig gerade Risskante erreicht werden.

Ebenfalls besonders vorteilhaft ist es, wenn das Flachbandkabel als Folienleiter ausgeführt ist. Abgesehen von der bekannten Eigenschaft, dass sich ein relativ dünner Folienleiter besonders gut mehrlagig im Inneren einer Wickelfederkassette unterbringen lässt, kann ein Folienleiter zudem bei einer mechanischen Überlastung besonders einfach abreißen.

Nachfolgend soll ein Ausführungsbeispiel der Erfindung anhand der Zeichnung dargestellt und erläutert werden. Es zeigen
- Figur 1: ein Teilstück einer Wickelfederkassette
- Figur 2: ein erstes Ausführungsbeispiel eines Flachbandkabels
- Figur 4: ein zweites Ausführungsbeispiel eines Flachbandkabels

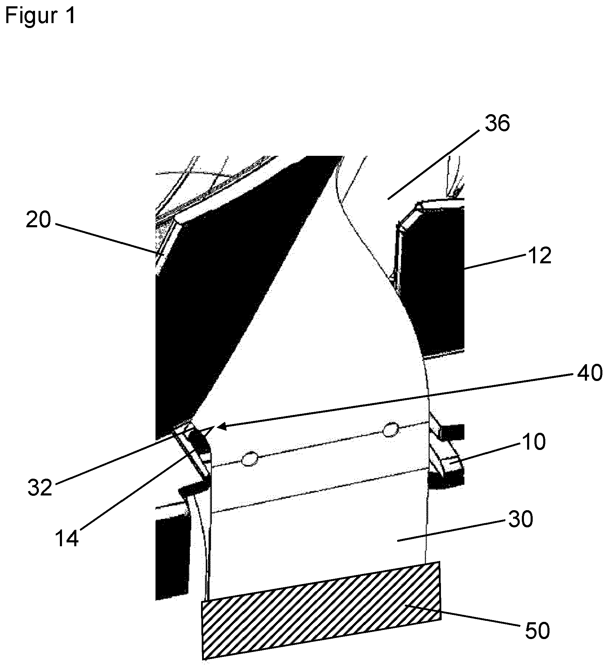

Die Figur 1 zeigt schematisch ein Teilstück einer erfindungsgemäß ausgeführten Wickelfederkassette. Die Wickelfederkassette wird hier nicht im Detail beschrieben, da der grundsätzliche Aufbau und die Funktionsweise einer Wickelfederkassette aus Veröffentlichungen, wie beispielsweise der bereits eingangs genannten Druckschrift DE 10 2010 022 542 A1, als bekannt vorausgesetzt werden kann.

Eine Wickelfederkassette weist typischerweise ein Statorteil 10 und ein gegenüber dem Statorteil 10 drehbeweglich angeordnetes Rotorteil 20 auf. Zwischen dem Statorteil 10 und dem Rotorteil 20 ist ein Flachbandkabel 30 angeordnet, welches elektrische Signale oder elektrische Energie zwischen dem Statorteil 10 und dem Rotorteil 20 überträgt.

Dazu ist das Flachbandkabel 30 sowohl am Statorteil 10 als auch am Rotorteil 20 mechanisch und elektrisch angebunden. Schematisch dargestellt ist in der Figur 1 ein Leitungsverbinder 50, der ein Ende des Flachbandkabels 30 mechanisch und elektrisch am Statorteil 10 fixiert. Davon ausgehend erstreckt sich das Flachbandkabel 30 über eine Kante 14 am Statorteil 10, und unter Ausbildung einer inneren Verdrehung 36 bis in einen Zwischenraum hinein, der zwischen einer Wand 12 am Statorteil 10 und dem Rotorteil 20 ausgebildet ist.

In der Zeichnung nicht im Detail dargestellt ist, dass das Flachbandkabel 30 innerhalb des Zwischenraums in mehreren Wicklungslagen oder unter Bildung von Umlenkschlaufen angeordnet ist. Hierdurch wickeln sich bei einer Drehbewegung des Rotorteils 20 relativ zum Statorteil 10 zumindest Teile des Flachbandkabels 30 auf oder ab.

Um ein Flachbandkabel 30 vor Überlastungen durch übermäßige Zugspannungen zu schützen, ist die Länge und Anordnung des Flachbandkabels 30 auf einen vorgesehenen maximalen Drehwinkelbereich hin ausgelegt. Auch werden mitunter Vorrichtungen zur Begrenzung des Drehwinkelbereichs vorgesehen. Diese sind allerdings besonders dann schwierig zu realisieren, wenn die Wickelfederkassette für mehr als eine vollständige Umdrehung vorgesehen ist.

In jedem Fall sind Fehlfunktionen nicht auszuschließen, bei denen es zu einer Überlastung und zu einem Abriss des Flachbandkabels 30 kommen kann. Reißt das Flachbandkabel 30, so werden in der Regel Leitungsadern 38 freigelegt, wodurch es zu Kurzschlüssen und weiteren Fehlern und Defekten kommen kann, deren Art und Ausmaß zu einem sicherheitskritischen Zustand führen kann, wie etwa dem ungewollten Auslösen des Airbags.

Erfindungsgemäß vorgesehen ist, durch eine gezielte Materialschwächung am Flachbandkabel 30, eine Stelle vorzugeben, an der im Falle einer mechanischen Überlastung ein Abriss erfolgen kann. Dieses wird auf einfache und vorteilhafte Weise durch eine am Rand des Flachbandkabels 30 eingebrachte Einkerbung 41 erreicht.

Die Einkerbung 40 ist, wie in der Figur 1 dargestellt, als ein dreieckförmiger Einschnitt in einem Randabschnitt 32 des Flachbandkabels 30 ausgeführt. Zur Einbringung der Einkerbung 40 wird vorteilhafterweise die Randseite des Flachbandkabels 30 gewählt, an der im Falle einer hohen Zugbelastung des Flachbandkabels 30 die größere Zugspannung auftritt. Hierdurch lässt sich ein schneller und relativ glatter Abriss erreichen.

Bevorzugt wird die Einkerbung 40 nahe einem Ende des Flachbandkabels 30, und damit in der Nähe eines Leitungsverbinders 50 eingebracht. Es kann auch an jedem Ende des Flachbandkabels 30, und damit sowohl in der Nähe des statorseitigen Leitungsverbinders 50 als auch in der Nähe des hier nicht dargestellten rotorseitigen Randverbinders jeweils eine Einkerbung vorgesehen werden.

Alternativ dazu kann eine Einkerbung 40 aber auch in einem mittleren Bereich des Flachbandkabels 30 eingebracht werden.

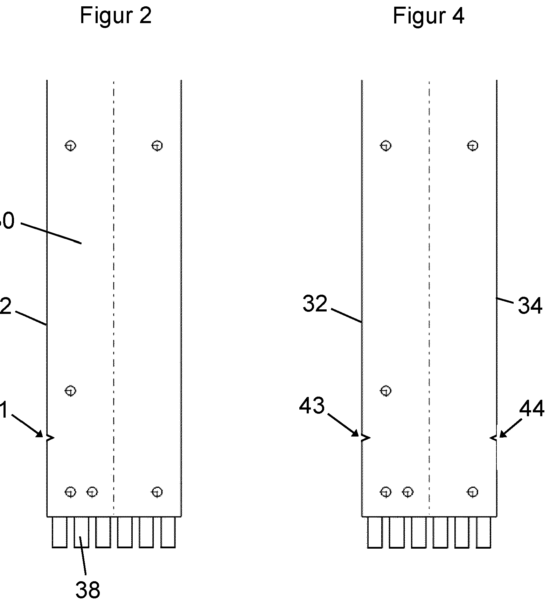

Die Figuren 2 und 4 verdeutlichen beispielhaft mehrere vorteilhafte Möglichkeiten, eine oder mehrere Einkerbungen 41, 43, 44 an einem Flachbandkabel 30 vorzusehen.

**In** der Figur 2 weist das Flachbandkabel 30, wie bereits in der Figur 1 dargestellt, eine einzige dreieckförmige Einkerbung 41 auf. Die Einkerbung 41 ist schmal im Vergleich zur Breite des Flachbandkabels 30 und vordringlich in die isolierende Mantelschicht des Flachbandkabels 30 eingebracht, wobei das Material der Leitungsadern 38 partiell mit in die Ausbildung der Einkerbung einbezogen werden kann.

Figur 4 zeigt als weitere Ausführungsvariante ein Flachbandkabel 30, welches auf gegenüberliegenden Randabschnitten 32, 34 jeweils eine Einkerbung 43, 44 aufweist, die einander gegenüberliegend angeordnet sind. Ein auf dem ersten Randabschnitt 32 beginnender und senkrecht zum ersten Randabschnitt 32 verlaufender Abriss kann so durch die Einkerbung 44 auf dem zweiten Randabschnitt 34 einen Zielpunkt finden, durch den der vollständige Abriss des Flachbandkabels 30 besonders schnell und sicher erfolgen kann.

### Bezugszeichen

- 10: Statorteil
- 12: Wand
- 14: Kante
- 20: Rotorteil
- 30: Flachbandkabel
- 32: erster Randabschnitt
- 34: zweiter Randabschnitt
- 36: Verdrehung
- 38: Leitungsadern
- 40, 41, 43, 44: Einkerbung
- 50: Leitungsverbinder

## Patentansprüche

1. Wickelfederkassette mit einem feststehenden Statorteil (10) und einem relativ dazu drehbeweglich angeordnetem Rotorteil (20),
und mit einem Flachbandkabel (30), welches an dem Statorteil (10) und dem Rotorteil (20) mechanisch fixiert ist, und das eine elektrische Verbindung zwischen dem Statorteil (10) und dem Rotorteil (20) herstellt,
wobei das Flachbandkabel (30) an wenigstens einem seitlichen Randabschnitt (32, 34) mindestens eine Einkerbung (40, 41, 43, 44) aufweist,
**dadurch gekennzeichnet,**
**dass** die Einkerbung (40, 41, 43, 44) v-förmig ausgebildet ist.

2. Wickelfederkassette nach Anspruch 1, **dadurch gekennzeichnet, dass** das Flachbandkabel (30) als Folienleiter ausgeführt ist.

3. Wickelfederkassette nach Anspruch 1, **dadurch gekennzeichnet, dass** das Flachbandkabel (30) an seinen beiden seitlichen Randabschnitten (32, 34) einander gegenüberliegend zwei Einkerbungen (43, 44) aufweist.

## Claims

1. Coil spring cassette with a fixed stator part (10) and a rotor part (20) arranged rotatably relative thereto,
and with a flat ribbon cable (30) which is mechanically fixed to the stator part (10) and the rotor part (20) and which provides an electrical connection between the stator part (10) and the rotor part (20),
wherein the flat ribbon cable (30) has at least one notch (40, 41, 43, 44) on at least one lateral edge section (32, 34),
**characterized in that**
that the notch (40, 41, 43, 44) is V-shaped.

2. Coil spring cassette according to claim 1, **characterized in that** the flat ribbon cable (30) is designed as a foil conductor.

3. Coil spring cassette according to claim 1, **characterized in that** the flat ribbon cable (30) has two notches (43, 44) mutually opposing each other on its two lateral edge sections (32, 34).

## Revendications

1. Cassette à ressort hélicoïdal comprenant une partie stator fixe (10) et une partie rotor (20) disposée de manière à pouvoir tourner par rapport à celle-ci, et avec un câble plat (30) qui est fixé mécaniquement à la partie stator (10) et à la partie rotor (20) et qui établit une connexion électrique entre la partie stator (10) et la partie rotor (20),
le câble plat (30) présentant au moins une encoche (40, 41, 43, 44) sur au moins une partie latérale (32, 34),
**caractérisé en ce que**
que l'encoche (40, 41, 43, 44) est réalisée en forme de V.

2. Cassette à ressort hélicoïdal selon la revendication 1, **caractérisée en ce que** le câble plat (30) est réalisé sous forme de conducteur en feuille.

3. Cassette à ressort hélicoïdal selon la revendication 1, **caractérisée en ce que** le câble plat (30) présente deux encoches (43, 44) opposées l'une à l'autre sur ses deux parties latérales (32, 34).
